# EUROPEAN PATENT APPLICATION

(11) **EP 3 441 892 A1**
(43) Date of publication of application: **13.02.2019**
(21) Application number: 17904350.0
(22) Date of filing: 30.09.2017
(51) Int. Cl.: G06F 17/30

(54) **ADVERTISEMENT GENERATING METHOD, COMPUTER-READABLE STORAGE MEDIUM AND SYSTEM**

(30) Priority: 05.05.2017 CN 201710313182
(71) Applicant: Ping An Technology (Shenzhen) Co., Ltd., Shenzhen, Guangdong (CN)
(72) Inventor: SHI, Guanghui, Shenzhen, Guangdong (CN); WANG, Jianming, Shenzhen, Guangdong (CN); XIAO, Jing, Shenzhen, Guangdong (CN)
(74) Representative: Becker Kurig Straus
(86) International application number: PCT/CN2017/105003
(87) International publication number: WO 2018/201666

(57) **Abstract**

The disclosure relates to an advertisement generation method and system. The advertisement generation method includes: acquiring click data of the advertisements subjected to advertisement exposure triggered by each user from various predetermined data source servers, and extracting picture style features of advertisement background pictures in the advertisement click data; during recommending of advertisements to predetermined users, analyzing the advertisement click data of the various users according to predetermined picture style features and a predetermined first analysis rule to obtain picture style features of advertisement pictures to be recommended corresponding to the various users; and generating recommended advertisements according to the obtained picture style features corresponding to the various users to recommend the recommended advertisements to the corresponding users. The disclosure can objectively or adaptively integrate the picture style features of other advertisements to improve the acceptance of advertisement and improve the advertisement production efficiency.

## Description

This application is based on the Paris Convention and claims priority to China Patent Application No. CN2017103131821, filed on May 05, 2017 and entitled "Advertisement Generation Method and System", which is hereby incorporated by reference in its entirety.

### TECHNICAL FIELD

This disclosure relates to the technical field of Internets, and more particularly relates to an advertisement generation method, a computer readable storage medium and a system.

### BACKGROUND

At the present, advertisements are produced generally after the advertisement designers prepare advertising materials manually and get advertising ideas, but this existing solution has the shortcomings that: on one hand, product managers and UI (User Interface) designers may subjectively think that their advertising ideas are the most effective on people, but it may not be true from the objective point of view. Therefore, the existing advertisement production solution is limited by the subjective thoughts of the product managers and the UI designers, thus leading to the restriction of advertisement acceptance; and on the other hand, the advertisement designers need to prepare the advertising materials manually, which brings about relatively long production period of the advertising materials, and then results in low advertisement production efficiency.

### SUMMARY

The disclosure aims at providing an advertisement generation method, a computer readable storage medium and a system, and is designed to improve advertisement acceptance and the advertisement production efficiency.

To achieve the above objective, an advertisement generation method is provided, the method including:
S1, acquiring click data of the advertisements subjected to advertisement exposure triggered by each user from various predetermined data source servers, and extracting picture style features of advertisement background pictures in the advertisement click data;
S2, during recommending of advertisements to predetermined users, analyzing the advertisement click data of the various users according to predetermined picture style features and a predetermined first analysis rule to obtain picture style features of advertisement pictures to be recommended corresponding to the various users;
S3, generating recommended advertisements according to the obtained picture style features corresponding to the various users to recommend the recommended advertisements to the corresponding users.

To achieve the above objective, an advertisement generation system is further provided, the system including:
an extracting module, which is used for acquiring click data of the advertisements subjected to advertisement exposure triggered by each user from various predetermined data source servers, and extracting picture style features of advertisement background pictures in the advertisement click data;
an analysis module, which is used for analyzing the advertisement click data of the various users according to predetermined picture style features and a predetermined first analysis rule during recommending of advertisements to predetermined users to obtain picture style features of advertisement pictures to be recommended corresponding to the various users;
a first generation module, which is used for generating recommended advertisements according to the obtained picture style features corresponding to the various users to recommend the recommended advertisements to the corresponding users.

In addition, a computer readable storage medium is further provided. The computer readable storage medium stores a computer program of an advertisement generation system. The computer program is executed to implement the steps of the above-mentioned method and device.

The disclosure has the beneficial effects that the disclosure acquires the click data of the advertisements subjected to advertisement exposure triggered by each user from the various predetermined data source servers, extracts the picture style features of the advertisement background pictures in the advertisement click data, analyzes the advertisement click data according to the predetermined picture style features and the predetermined first analysis rule during recommendation of the advertisements to the predetermined users to obtain the picture style features of the advertisement pictures to be recommended corresponding to the various users, and generates the recommended advertisements recommended to the corresponding users according to the obtained picture style features corresponding to the various users. The disclosure can objectively or adaptively integrate the picture style features of other advertisements to improve advertisement acceptance; and in addition, advertisements are produced relatively quickly, so that the advertisement production efficiency is improved.

### BRIEF DESCRIPTION OF THE ACCOMPANYING DRAWINGS

FIG. 1 is a flowchart of a first embodiment of an advertisement generation method of the disclosure;
FIG. 2 is a flowchart of a second embodiment of an advertisement generation method of the disclosure;
FIG. 3 is a schematic diagram of an operation environment of one embodiment of an advertisement generation system of the disclosure;
FIG. 4 is a schematic diagram of a structure of a first embodiment of an advertisement generation system of the disclosure;
FIG. 5 is a schematic diagram of a structure of a second embodiment of an advertisement generation system of the disclosure.

### DETAILED DESCRIPTION OF ILLUSTRATED EMBODIMENTS

A description will be made below to the principle and features of the disclosure in combination of accompanying drawings, and examples that are taken are merely explanatory of the disclosure, but not intended to limit the scope of the disclosure.

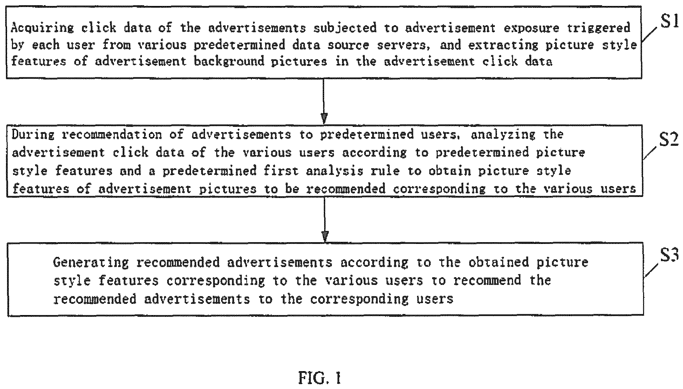

As shown in FIG. 1, it is a flowchart of one embodiment of an advertisement generation method of the disclosure. The advertisement generation method may be executed by an advertisement generation system. The system may be implemented by means of software and/or hardware, and may be integrated in a server. The advertisement generation method includes:
Step S1, click data of the advertisements subjected to advertisement exposure triggered by each user are acquired from various predetermined data source servers, and picture style features of advertisement background pictures in the advertisement click data are extracted;
in this embodiment, the predetermined data source servers include advertising channel servers (for example, Baidu advertisement promotion servers, Sina advertisement promotion servers, etc.) and/or service servers (life insurance servers, vehicle insurance servers, bank servers, etc.), wherein the various predetermined data source servers record advertisements, which are subjected to advertisement exposure, of the various users, count the advertisements to acquire the corresponding advertisement click data, and store the data for later use.

Wherein, the system may acquire the advertisement click data from the predetermined data source servers in real time to acquire the latest advertisement click data, or acquire the advertisement click data from the predetermined data source servers regularly (for example, every half an hour) to relieve the system burden.

Wherein, the advertisement exposure means that after being clicked by a client user, one network implantation advertisement (for example, a map file or a program) is successfully downloaded into a client browser. The advertisement click data include marks of clicked advertisements, the advertisement background pictures of the clicked advertisements and the like.

Wherein, by extraction of the advertisement background pictures in the advertisement click data, the corresponding picture style features may be extracted out. Background features of the advertisement background pictures include advertisement background patterns, and the picture style features (for example, picture style features of abstract pictures, picture style features of ink and wash paintings, etc.) of the advertisement background patterns. Specifically, the extraction may be performed by using a predetermined picture style extraction tool. For example, the predetermined picture style extraction tool is a framework such as cafee and tensorflow, and a model such as goolenet and VGG16.

Step S2, during recommendation of advertisements to predetermined users, the advertisement click data of the various users are analyzed according to predetermined picture style features and a predetermined first analysis rule to obtain picture style features of advertisement pictures to be recommended corresponding to the various users;
wherein, the system may actively recommend the advertisements to the predetermined users, and the predetermined users are users doing the advertisement exposure within the recent preset time (for example, in the recent three months), or are offline customers of specific services (for example, life insurance customers of the PING AN Insurance (Group) Company of China, Ltd.).

Preferably, the predetermined picture style features may be obtained according to the following ways: a preset number (for example, 500) of reference advertisement pictures are acquired, and the reference advertisement pictures are advertisement pictures which have been already advertised and have gained advertising effects. For example, it may automatically randomly select the reference advertisement pictures from a predetermined picture library, may manually select the reference advertisement pictures from the predetermined picture library, and also may automatically randomly select part of pictures from the predetermined picture library as the reference advertisement pictures (these reference advertisement pictures are relatively easily accepted by the customers); and corresponding picture style features are extracted out from all the reference advertisement pictures by using the predetermined picture style feature extraction tool, and all the extracted picture style features are used as the predetermined picture style features.

In this embodiment, the predetermined first analysis rule in one embodiment may be as follows: advertisements clicked for the most times are acquired from the advertisements corresponding to the various users by analyzing the click numbers of times of the various advertisements in the advertisement click data of the various users, and then the corresponding picture style features are extracted out from the advertisements clicked for the most times; and if the extracted picture style features belong to the above-mentioned predetermined picture style features, these picture style features are used as the corresponding picture style features of the advertisement pictures to be recommended corresponding to the various users. In other embodiments, the various users may be classified into different types according to different advertisement styles, and each type corresponds to one picture style feature or multiple similar picture style features. For each type of users, advertisements corresponding to one picture style feature or multiple similar picture style features are acquired, then one or multiple advertisements clicked for the most times are acquired from these advertisements, and the picture style features of the one or multiple advertisements clicked for the most times are extracted; and if the extracted picture style features belong to the above-mentioned predetermined picture style features, these picture style features are used as the picture style features of the advertisement pictures to be recommended of this type of users.

Step S3, recommended advertisements are generated according to the obtained picture style features corresponding to the various users to recommend the recommended advertisements to the corresponding users.

In this embodiment, after the picture style features corresponding to the various users are obtained, advertisements having the picture style features corresponding to the various users are generated, for example, recommended advertisements having the picture style features of the abstract pictures or the picture style features of the ink and wash paintings, etc. are generated, and then the generated recommended advertisements are recommended to user terminals of the corresponding users for use. After being selected or processed by the users, the recommended advertisements may be distributed to various terminals for displaying or playing, so that general customers can browse these advertisements.

In this embodiment, the picture style features, which are obtained by analyzing the advertisement click data, of the advertisement pictures to be recommended are deemed as those browsed or checked by the customers for a relatively large number of times, so that they are easily accepted by the customers (for example, one or multiple colors therein easily raise visual attentions, or one or multiple picture style features make the customers happy, etc.), and accord with or are close to the aesthetic standard of the general customers. The recommended advertisements generated on the basis of these picture style features may play a potential role, thus bringing certain benefits to enterprises.

Compared with the prior art, this embodiment acquires the click data of the advertisements subjected to advertisement exposure triggered by each user from the various predetermined data source servers, extracts the picture style features of the advertisement background pictures in the advertisement click data, analyzes the advertisement click data according to the predetermined picture style features and the predetermined first analysis rule during recommendation of the advertisements to the predetermined users to obtain the picture style features of the advertisement pictures to be recommended corresponding to the various users, and generates the recommended advertisements recommended to the corresponding users according to the obtained picture style features corresponding to the various users. This embodiment can objectively or adaptively integrate the picture style features of other advertisements to improve advertisement acceptance; and in addition, advertisements are produced relatively quickly, so that the advertisement production efficiency is improved.

In one preferred embodiment, on the basis of the above-mentioned embodiments of FIG. 1, the above-mentioned first analysis rule includes:
a1, if a user does not have the advertisement click data, a crowd type to which the user belongs is determined according to a predetermined crowd type clustering result (crowd clustering may be performed on all the users by a predetermined algorithm "for example, a clustering algorithm, a collaborative filtering algorithm, etc." to determine the crowd types to which all the users belong), and the advertisement click data of various users in the determined crowd type are analyzed according to a predetermined second analysis rule to obtain picture style features of advertisement pictures to be recommended corresponding to the user;
   preferably, the predetermined second analysis rule includes: the click numbers of times of various advertisements clicked by the various users in the determined crowd type are counted; a preset number of advertisements having the click numbers of times greater than a second preset threshold value (for example, the second preset threshold value is 100) are sequenced, and a similarity of the picture style features of the various sequenced advertisements is calculated (if the similarity is higher, the picture style features are more similar, and an existing calculation method may be adopted); if the similarity is greater than a preset similarity threshold value, it judges whether the predetermined picture style features are included in the picture style features of all the sequenced advertisements or not; if the predetermined picture style features are included, these predetermined picture style features are used as the picture style features of the advertisement pictures to be recommended of the user, or if the predetermined picture style features are not included, one advertisement is selected randomly from the advertisements, and the picture style features corresponding to the randomly selected advertisement are used as the picture style features of the advertisement pictures to be recommended of the user, or the picture style features of the advertisements clicked for the most times are used as the picture style features of the advertisement pictures to be recommended of the user.
a2, If the user has the advertisement click data, and the click number of times of each advertisement clicked by the user is less than or equal to a first preset threshold value (for example, the first preset threshold value is 10), the user is deemed as not having the advertisement click data, and the picture style features of the advertisement pictures to be recommended corresponding to the user are determined according to the above-mentioned step a1;
a3, if the user has the advertisement click data, and at least one advertisement in the advertisements clicked by the user has the click number of times greater than the first preset threshold value, the advertisements having the click numbers of times greater than the first preset threshold value are sequenced according to the click numbers of times, and the sequenced advertisements are analyzed by using a predetermined third analysis rule to obtain the picture style features of the advertisement pictures to be recommended corresponding to the user.

Preferably, the third analysis rule includes: the picture style features of the advertisements clicked for the most times are used as the picture style features of the advertisement pictures to be recommended of the user; if multiple advertisements are clicked for the most times, it analyzes whether the predetermined picture style features are included in the picture style features of all the advertisements clicked for the most times or not; and if the predetermined picture style features are included, the predetermined picture style features are used as the picture style features of the advertisement pictures to be recommended of the user, or if the predetermined picture style features are not included, one advertisement is selected randomly from the advertisements, and the picture style features corresponding to the randomly selected advertisement are used as the picture style features of the advertisement pictures to be recommended of the user. Or the third analysis rule includes: a difference between the click numbers of times of two adjacent advertisements is calculated; if the calculated difference is less than a preset difference (for example, the preset difference is 5), the picture style features of the advertisements clicked for the most times are used as the picture style features of the advertisement pictures to be recommended of the user (if multiple advertisements are clicked for the most, the picture style features of the advertisement pictures to be recommended of the user are obtained according to the above-mentioned method); if the difference is greater than or equal to the preset difference, the advertisement clicked for less times in the two corresponding advertisements and advertisements having the click numbers of times less than that of the advertisement clicked for less times are culled out; if only one advertisement remains after culling operation, the picture style features corresponding to the remaining advertisement are used as the picture style features of the advertisement pictures to be recommended of the user; if multiple advertisements remain after culling operation, it judges whether the predetermined picture style features are included in the picture style features of all the remaining advertisements or not; if the predetermined picture style features are included, the predetermined picture style features are used as the picture style features of the advertisement pictures to be recommended of the user; if the predetermined picture style features are not included, one advertisement is selected randomly from the advertisements, and the picture style features corresponding to the randomly selected advertisement are used as the picture style features of the advertisement pictures to be recommended of the user, or the picture style features of the advertisements clicked for the most times are used as the picture style features of the advertisement pictures to be recommended of the user.

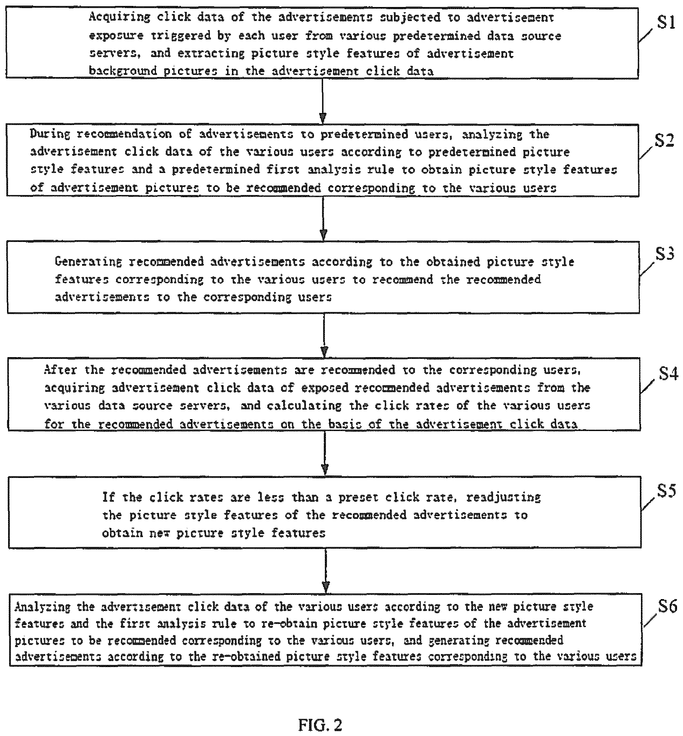

In one preferred embodiment, as shown in FIG. 2, on the basis of the above-mentioned embodiments of FIG. 1, after the step S3, the method further includes:
Step S4, after the recommended advertisements are recommended to the corresponding users, advertisement click data of exposed recommended advertisements are acquired from the various data source servers, and the click rates of the various users for the recommended advertisements are calculated on the basis of the advertisement click data, wherein a calculation method of the click rates is to divide the number of users triggering advertisement exposure of advertisements recommended to each user by the total number of users.. Step S5, if the click rates are less than a preset click rate (for example, the preset click rate is 0.08), the picture style features of the recommended advertisements are readjusted to obtain new picture style features, for example, the predetermined picture style features in the above-mentioned step S2 are adjusted to obtain the new picture style features.
Step S6, the advertisement click data of the various users are analyzed according to the new picture style features and the first analysis rule to re-obtain picture style features of the advertisement pictures to be recommended corresponding to the various users, and recommended advertisements are generated according to the re-obtained picture style features corresponding to the various users.

In this embodiment, the new picture style features are obtained by adjusting the picture style features of the recommended advertisements having the click rates less than the preset click rate, and the recommended advertisements are generated on the basis of the new picture style features, so that the recommended advertisements can be flexibly adjusted, and the acceptance of the recommended advertisement is further increased.

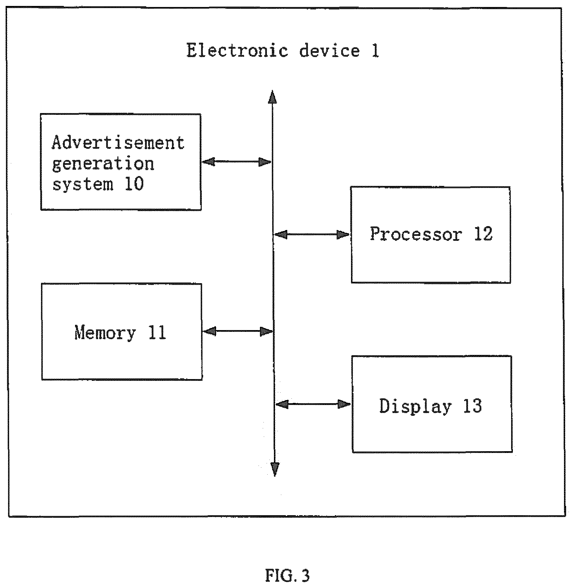

With reference to FIG. 3, it is a schematic diagram of an operation environment of a preferred embodiment of an advertisement generation system 10 of the disclosure.

In this embodiment, the advertisement generation system 10 is installed and operated in an electronic device 1. The electronic device 1 may be computing equipment such as a desk computer, a notebook computer, a palm computer and a server. The electronic device 1 may include, but not limited to, a memory 11, a processor 12 and a display 13. FIG. 3 only shows the electronic device 1 having the assemblies 11 to 13, but it should be understood that it does not require that all the shown assemblies are implemented, and to be substitutable, more or fewer assemblies are implemented.

In some embodiments, the memory 11 may be an internal storage unit of the electronic device 1, for example a hard disk or an internal storage of the electronic device 1. In some other embodiments, the memory 11 also may be external storage equipment of the electronic device 1, for example, a plug-in type hard disk, an SMC (Smart Media Card), an SD (Secure Digital) card, an FC (Flash Card), etc. which are equipped on the electronic device 1. Further, the memory 11 also may include both the internal storage unit and the external storage equipment of the electronic device 1. The memory 11 is used for storing application software installed in the electronic device 1 and all types of data, for example, a program code of the advertisement generation system 10 and the like. The memory 11 also may be used for temporarily storing data which have been output or are about to be output.

The processor 12 in some embodiments may be a CPU (Central Processing unit), a micro processor or other data processing chips, and is used for operating the program code stored in the memory 11 or processing data, for example, executing the advertisement generation system 10 and the like.

The display 13 in some embodiments may be an LED display, a liquid crystal display, a touch type liquid crystal display and an OLED (Organic Light-Emitting Diode) touch device, etc., and is used for displaying information processed in the electronic device 1 and displaying a visual user interface, for example, an advertisement generation interface and the like. The components 11 to 13 of the electronic device 1 communicate with one another through a system bus.

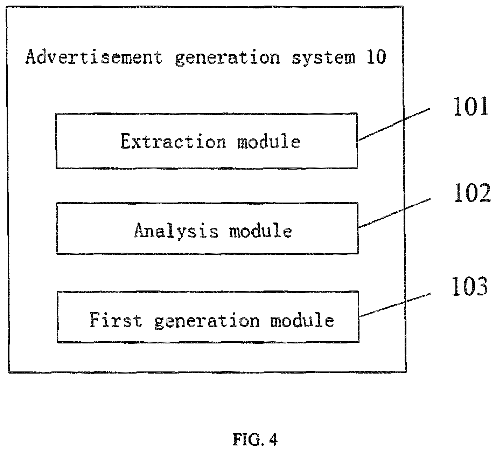

With reference to FIG. 4, it is a functional module drawing of a preferred embodiment of an advertisement generation system 10. In this embodiment, the advertisement generation system 10 may be divided into one or multiple modules. The one or multiple modules are stored in the memory 11, and are executed by one or multiple processors (the processor 12 in this embodiment) to complete the disclosure. For example, in FIG. 4, the advertisement generation system 10 may be divided into an extraction module 101, an analysis module 102 and a first generation module 103. These modules described in the disclosure are a series of computer program instruction segments capable of completing specific functions, and are more suitable for describing the execution process of the advertisement generation system 10 in the electronic device 1 than programs, wherein:
the extraction module 101 is used for acquiring click data of the advertisements subjected to advertisement exposure triggered by each user from various predetermined data source servers, and extracting picture style features of advertisement background pictures in the advertisement click data;
in this embodiment, the predetermined data source servers include advertising channel servers (for example, Baidu advertisement promotion servers, Sina advertisement promotion servers, etc.) and/or service servers (life insurance servers, vehicle insurance servers, bank servers, etc.), wherein the various predetermined data source servers record advertisements, which are subjected to advertisement exposure, of the various users, count the advertisements to acquire the corresponding advertisement click data, and store the data for later use.

Wherein, the system may acquire the advertisement click data from the predetermined data source servers in real time to acquire the latest advertisement click data, or acquire the advertisement click data from the predetermined data source servers regularly (for example, every half an hour) to relieve the system burden.

Wherein, the advertisement exposure means that after being clicked by a client user, one network implantation advertisement (for example, a map file or a program) is successfully downloaded into a client browser. The advertisement click data include marks of clicked advertisements, the advertisement background pictures of the clicked advertisements and the like.

Wherein, by extraction of the advertisement background pictures in the advertisement click data, the corresponding picture style features may be extracted out. Background features of the advertisement background pictures include advertisement background patterns, and the picture style features (for example, picture style features of abstract pictures, picture style features of ink and wash paintings, etc.) of the advertisement background patterns. Specifically, the extraction may be performed by using a predetermined picture style extraction tool. For example, the predetermined picture style extraction tool is a framework such as cafee and tensorflow, and a model such as goolenet and VGG16.

The analysis module 102 is used for analyzing the advertisement click data of the various users according to predetermined picture style features and a predetermined first analysis rule during recommendation of advertisements to predetermined users to obtain picture style features of advertisement pictures to be recommended corresponding to the various users;
wherein, the system may actively recommend the advertisements to the predetermined users, and the predetermined users are users doing the advertisement exposure within the recent preset time (for example, in the recent three months), or are offline customers of specific services (for example, life insurance customers of the PING AN Insurance (Group) Company of China, Ltd.).

Preferably, the predetermined picture style features may be obtained according to the following ways: a preset number (for example, 500) of reference advertisement pictures are acquired, and the reference advertisement pictures are advertisement pictures which have been already advertised and have gained advertising effects. For example, it may automatically randomly select the reference advertisement pictures from a predetermined picture library, may manually select the reference advertisement pictures from the predetermined picture library, and also may automatically randomly select part of pictures from the predetermined picture library as the reference advertisement pictures (these reference advertisement pictures are relatively easily accepted by the customers); and corresponding picture style features are extracted out from all the reference advertisement pictures by using the predetermined picture style feature extraction tool, and all the extracted picture style features are used as the predetermined picture style features.

In this embodiment, the predetermined first analysis rule in one embodiment may be as follows: advertisements clicked for the most times are acquired from the advertisements corresponding to the various users by analyzing the click numbers of times of the various advertisements in the advertisement click data of the various users, and then the corresponding picture style features are extracted out from the advertisements clicked for the most times; and if the extracted picture style features belong to the above-mentioned predetermined picture style features, these picture style features are used as the corresponding picture style features of the advertisement pictures to be recommended corresponding to the various users. In other embodiments, the various users may be classified into different types according to different advertisement styles, and each type corresponds to one picture style feature or multiple similar picture style features. For each type of users, advertisements corresponding to one picture style feature or multiple similar picture style features are acquired, then one or multiple advertisements clicked for the most times are acquired from these advertisements, and the picture style features of the one or multiple advertisements clicked for the most times are extracted; and if the extracted picture style features belong to the above-mentioned predetermined picture style features, these picture style features are used as the picture style features of the advertisement pictures to be recommended of this type of users.

The first generation module 103 is used for generating recommended advertisements according to the obtained picture style features corresponding to the various users to recommend the recommended advertisements to the corresponding users.

In this embodiment, after the picture style features corresponding to the various users are obtained, advertisements having the picture style features corresponding to the various users are generated, for example, recommended advertisements having the picture style features of the abstract pictures or the picture style features of the ink and wash paintings, etc. are generated, and then the generated recommended advertisements are recommended to user terminals of the corresponding users for use. After being selected or processed by the users, the recommended advertisements may be distributed to various terminals for displaying or playing, so that general customers can browse these advertisements.

In this embodiment, the picture style features, which are obtained by analyzing the advertisement click data, of the advertisement pictures to be recommended are deemed as those browsed or checked by the customers for a relatively large number of times, so that they are easily accepted by the customers (for example, one or multiple colors therein easily raise visual attentions, or one or multiple picture style features make the customers happy, etc.), and accord with or are close to the aesthetic standard of the general customers. The recommended advertisements generated on the basis of these picture style features may play a potential role, thus bringing certain benefits to enterprises.

In one preferred embodiment, on the basis of the above-mentioned embodiments of FIG. 4, the above-mentioned first analysis rule includes:
a1, if a user does not have the advertisement click data, a crowd type to which the user belongs is determined according to a predetermined crowd type clustering result (crowd clustering may be performed on all the users by a predetermined algorithm "for example, a clustering algorithm, a collaborative filtering algorithm, etc." to determine the crowd types to which all the users belong), and the advertisement click data of various users in the determined crowd type are analyzed according to a predetermined second analysis rule to obtain picture style features of advertisement pictures to be recommended corresponding to the user;
   preferably, the predetermined second analysis rule includes: the click numbers of times of various advertisements clicked by the various users in the determined crowd type are counted; a preset number of advertisements having the click numbers of times greater than a second preset threshold value (for example, the second preset threshold value is 100) are sequenced, and a similarity of the picture style features of the various sequenced advertisements is calculated (if the similarity is higher, the picture style features are more similar, and an existing calculation method may be adopted); if the similarity is greater than a preset similarity threshold value, it judges whether the predetermined picture style features are included in the picture style features of all the sequenced advertisements or not; if the predetermined picture style features are included, these predetermined picture style features are used as the picture style features of the advertisement pictures to be recommended of the user, or if the predetermined picture style features are not included, one advertisement is selected randomly from the advertisements, and the picture style features corresponding to the randomly selected advertisement are used as the picture style features of the advertisement pictures to be recommended of the user, or the picture style features of the advertisements clicked for the most times are used as the picture style features of the advertisement pictures to be recommended of the user.
a2, If the user has the advertisement click data, and the click number of times of each advertisement clicked by the user is less than or equal to a first preset threshold value (for example, the first preset threshold value is 10), the user is deemed as not having the advertisement click data, and the picture style features of the advertisement pictures to be recommended corresponding to the user are determined according to the above-mentioned a1;
a3, if the user has the advertisement click data, and at least one advertisement in the advertisements clicked by the user has the click number of times greater than the first preset threshold value, the advertisements having the click numbers of times greater than the first preset threshold value are sequenced according to the click numbers of times, and the sequenced advertisements are analyzed by using a predetermined third analysis rule to obtain the picture style features of the advertisement pictures to be recommended corresponding to the user.

Preferably, the third analysis rule includes: the picture style features of the advertisements clicked for the most times are used as the picture style features of the advertisement pictures to be recommended of the user; if multiple advertisements are clicked for the most times, it analyzes whether the predetermined picture style features are included in the picture style features of all the advertisements clicked for the most times or not; and if the predetermined picture style features are included, the predetermined picture style features are used as the picture style features of the advertisement pictures to be recommended of the user, or if the predetermined picture style features are not included, one advertisement is selected randomly from the advertisements, and the picture style features corresponding to the randomly selected advertisement are used as the picture style features of the advertisement pictures to be recommended of the user. Or the third analysis rule includes: a difference between the click numbers of times of two adjacent advertisements is calculated; if the calculated difference is less than a preset difference (for example, the preset difference is 5), the picture style features of the advertisements clicked for the most times are used as the picture style features of the advertisement pictures to be recommended of the user (if multiple advertisements are clicked for the most, the picture style features of the advertisement pictures to be recommended of the user are obtained according to the above-mentioned method); if the difference is greater than or equal to the preset difference, the advertisement clicked for less times in the two corresponding advertisements and advertisements having the click numbers of times less than that of the advertisement clicked for less times are culled out; if only one advertisement remains after culling operation, the picture style features corresponding to the remaining advertisement are used as the picture style features of the advertisement pictures to be recommended of the user; if multiple advertisements remain after culling operation, it judges whether the predetermined picture style features are included in the picture style features of all the remaining advertisements or not; if the predetermined picture style features are included, the predetermined picture style features are used as the picture style features of the advertisement pictures to be recommended of the user; if the predetermined picture style features are not included, one advertisement is selected randomly from the advertisements, and the picture style features corresponding to the randomly selected advertisement are used as the picture style features of the advertisement pictures to be recommended of the user, or the picture style features of the advertisements clicked for the most times are used as the picture style features of the advertisement pictures to be recommended of the user.

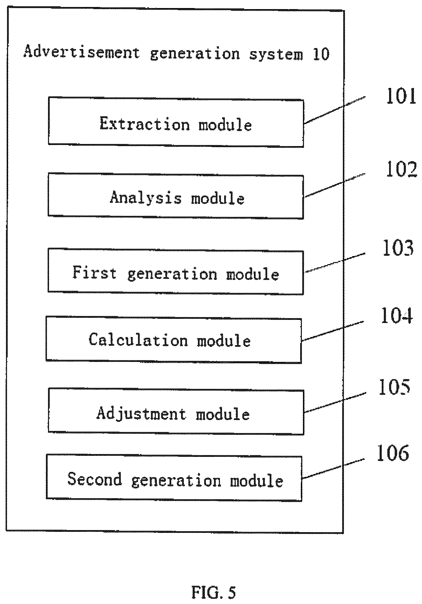

In one preferred embodiment, as shown in FIG. 5, on the basis of the above-mentioned embodiments of FIG. 4, the advertisement generation system further includes:
a calculation module 104, which is used for acquiring advertisement click data of exposed recommended advertisements from the various data source servers after the recommended advertisements are recommended to the corresponding users, and calculating the click rates of the various users for the recommended advertisements on the basis of the advertisement click data, wherein a calculation method of the click rates is to divide the number of users triggering advertisement exposure of advertisements recommended to each user by the total number of users.

An adjustment module 105, which is used for readjusting the picture style features of the recommended advertisements if the click rates are less than a preset click rate (for example, the preset click rate is 0.08) to obtain new picture style features. For example, the above-mentioned predetermined picture style features are adjusted to obtain the new picture style features.

A second generation module 106, which is used for analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

In this embodiment, the new picture style features are obtained by adjusting the picture style features of the recommended advertisements having the click rates less than the preset click rate, and the recommended advertisements are generated on the basis of the new picture style features, so that the recommended advertisements can be flexibly adjusted, and the acceptance of recommended advertisement is further increased.

The above-mentioned descriptions are only preferred embodiments of the disclosure, but not intended to limit the disclosure. Any modifications, equivalent replacements and improvements that are made without departing from the spirit of principle of the disclosure shall all fall within the scope of protection of the disclosure.

## Claims

1. An advertisement generation method, comprising:
S1, acquiring click data of the advertisements subjected to advertisement exposure triggered by each user from various predetermined data source servers, and extracting picture style features of advertisement background pictures in the advertisement click data;
S2, during recommendation of advertisements to predetermined users, analyzing the advertisement click data of the various users according to predetermined picture style features and a predetermined first analysis rule to obtain picture style features of advertisement pictures to be recommended corresponding to the various users;
S3, generating recommended advertisements according to the obtained picture style features corresponding to the various users to recommend the recommended advertisements to the corresponding users.

2. The advertisement generation method according to claim 1, which is **characterized in that** the first analysis rule comprises:
a1, if a user does not have the advertisement click data, determining a crowd type to which the user belongs according to a predetermined crowd type clustering result, and analyzing the advertisement click data of various users in the determined crowd type according to a predetermined second analysis rule to obtain picture style features of advertisement pictures to be recommended corresponding to the user;
a2, if the user has the advertisement click data, and the click number of times of each advertisement clicked by the user is less than or equal to a first preset threshold value, deeming the user as not having the advertisement click data, and determining the picture style features of the advertisement pictures to be recommended corresponding to the user according to the step a1;
a3, if the user has the advertisement click data, and at least one advertisement in the advertisements clicked by the user has the click number of times greater than the first preset threshold value, sequencing the advertisements having the click numbers of times greater than the first preset threshold value according to the click numbers of times, and analyzing the sequenced advertisements by using a predetermined third analysis rule to obtain the picture style features of the advertisement pictures to be recommended corresponding to the user.

3. The advertisement generation method according to claim 2, which is **characterized in that** the second analysis rule comprises:
counting the click numbers of times of various advertisements clicked by the various users in the determined crowd type;
sequencing a preset number of advertisements having the click numbers of times greater than a second preset threshold value, and calculating a similarity of the picture style features of the various sequenced advertisements;
if the similarity is greater than a preset similarity threshold value, judging whether the predetermined picture style features are included in the picture style features of all the sequenced advertisements or not, and if the predetermined picture style features are included, determining the predetermined picture style features as the picture style features of the advertisement pictures to be recommended corresponding to the user.

4. The advertisement generation method according to claim 2, which is **characterized in that** the third analysis rule comprises:
determining the picture style features of the advertisements clicked for the most times as the picture style features of the advertisement pictures to be recommended of the user; or
calculating a difference between the click numbers of times of two adjacent advertisements; if the calculated difference is less than a preset difference, determining the picture style features of the advertisements clicked for the most times as the picture style features of the advertisement pictures to be recommended of the user; if the difference is greater than or equal to the preset difference, culling out the advertisement clicked for less times in the two corresponding advertisements and advertisements having the click numbers of times less than that of the advertisement clicked for less times; judging whether the predetermined picture style features are included in the picture style features of advertisements remaining after culling operation or not; if the predetermined picture style features are included, determining the predetermined picture style features as the picture style features of the advertisement pictures to be recommended of the user.

5. The advertisement generation method according to claim 1, after the step S3, further comprising:
S4, after the recommended advertisements are recommended to the corresponding users, acquiring advertisement click data of exposed recommended advertisements from the various data source servers, and calculating the click rates of the various users for the recommended advertisements on the basis of the advertisement click data;
S5, if the click rates are less than a preset click rate, readjusting the picture style features of the recommended advertisements to obtain new picture style features;
S6, analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

6. The advertisement generation method according to claim 2, after the step S3, further comprising:
S4, after the recommended advertisements are recommended to the corresponding users, acquiring advertisement click data of exposed recommended advertisements from the various data source servers, and calculating the click rates of the various users for the recommended advertisements on the basis of the advertisement click data;
S5, if the click rates are less than a preset click rate, readjusting the picture style features of the recommended advertisements to obtain new picture style features;
S6, analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

7. The advertisement generation method according to claim 3 or 4, after the step S3, further comprising:
S4, after the recommended advertisements are recommended to the corresponding users, acquiring advertisement click data of exposed recommended advertisements from the various data source servers, and calculating the click rates of the various users for the recommended advertisements on the basis of the advertisement click data;
S5, if the click rates are less than a preset click rate, readjusting the picture style features of the recommended advertisements to obtain new picture style features;
S6, analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

8. An advertisement generation system, comprising:
an extraction module, which is used for acquiring click data of the advertisements subjected to advertisement exposure triggered by each user from various predetermined data source servers, and extracting picture style features of advertisement background pictures in the advertisement click data;
an analysis module, which is used for analyzing the advertisement click data of the various users according to predetermined picture style features and a predetermined first analysis rule during recommendation of advertisements to predetermined users to obtain picture style features of advertisement pictures to be recommended corresponding to the various users;
a first generation module, which is used for generating recommended advertisements according to the obtained picture style features corresponding to the various users to recommend the recommended advertisements to the corresponding users.

9. The advertisement generation system according to claim 8, which is **characterized in that** the first analysis rule comprises: a1, if a user does not have the advertisement click data, determining a crowd type to which the user belongs according to a predetermined crowd type clustering result, and analyzing the advertisement click data of various users in the determined crowd type according to a predetermined second analysis rule to obtain picture style features of advertisement pictures to be recommended corresponding to the user; a2, if the user has the advertisement click data, and the click number of times of each advertisement clicked by the user is less than or equal to a first preset threshold value, deeming the user as not having the advertisement click data, and determining the picture style features of the advertisement pictures to be recommended corresponding to the user according to a1; a3, if the user has the advertisement click data, and at least one advertisement in the advertisements clicked by the user has the click number of times greater than the first preset threshold value, sequencing the advertisements having the click numbers of times greater than the first preset threshold value according to the click numbers of times, and analyzing the sequenced advertisements by using a predetermined third analysis rule to obtain the picture style features of the advertisement pictures to be recommended corresponding to the user.

10. The advertisement generation system according to claim 9, which is **characterized in that** the second analysis rule comprises:
counting the click numbers of times of various advertisements clicked by the various users in the determined crowd type; sequencing a preset number of advertisements having the click numbers of times greater than a second preset threshold value, and calculating a similarity of the picture style features of the various sequenced advertisements; if the similarity is greater than a preset similarity threshold value, judging whether the predetermined picture style features are included in the picture style features of all the sequenced advertisements or not, and if the predetermined picture style features are included, determining the predetermined picture style features as the picture style features of the advertisement pictures to be recommended corresponding to the user.

11. The advertisement generation system according to claim 9, which is **characterized in that** the third analysis rule comprises:
determining the picture style features of the advertisements clicked for the most times as the picture style features of the advertisement pictures to be recommended of the user; or calculating a difference between the click numbers of times of two adjacent advertisements; if the calculated difference is less than a preset difference, determining the picture style features of the advertisements clicked for the most times as the picture style features of the advertisement pictures to be recommended of the user; if the difference is greater than or equal to the preset difference, culling out the advertisement clicked for less times in the two corresponding advertisements and advertisements having the click numbers of times less than that of the advertisement clicked for less times; judging whether the predetermined picture style features are included in the picture style features of advertisements remaining after culling operation or not; if the predetermined picture style features are included, determining the predetermined picture style features as the picture style features of the advertisement pictures to be recommended of the user.

12. The advertisement generation system according to claim 8, further comprising:
a calculation module, which is used for acquiring advertisement click data of exposed recommended advertisements from the various data source servers after the recommended advertisements are recommended to the corresponding users, and calculating the click rates of the various users for the recommended advertisements on the basis of the advertisement click data;
an adjustment module, which is used for readjusting the picture style features of the recommended advertisements if the click rates are less than a preset click rate to obtain new picture style features;
a second generation module, which is used for analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

13. The advertisement generation system according to claim 9, further comprising:
a calculation module, which is used for acquiring advertisement click data of exposed recommended advertisements from the various data source servers after the recommended advertisements are recommended to the corresponding users, and calculating the click rates of the various users for the recommended advertisements on the basis of the advertisement click data;
an adjustment module, which is used for readjusting the picture style features of the recommended advertisements if the click rates are less than a preset click rate to obtain new picture style features;
a second generation module, which is used for analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

14. The advertisement generation system according to claim 10, further comprising:
a calculation module, which is used for acquiring advertisement click data of exposed recommended advertisements from the various data source servers after the recommended advertisements are recommended to the corresponding users, and calculating the click rates of the various users for the recommended advertisements on the basis of the advertisement click data;
an adjustment module, which is used for readjusting the picture style features of the recommended advertisements if the click rates are less than a preset click rate to obtain new picture style features;
a second generation module, which is used for analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

15. The advertisement generation system according to claim 11, further comprising:
a calculation module, which is used for acquiring advertisement click data of exposed recommended advertisements from the various data source servers after the recommended advertisements are recommended to the corresponding users, and calculating the click rates of the various users for the recommended advertisements on the basis of the advertisement click data;
an adjustment module, which is used for readjusting the picture style features of the recommended advertisements if the click rates are less than a preset click rate to obtain new picture style features;
a second generation module, which is used for analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.

16. A computer readable storage medium, which is **characterized in that** the computer readable storage medium stores a computer program of an advertisement generation system; the computer program is executed to implement the following steps:
S1, acquiring click data of the advertisements subjected to advertisement exposure triggered by each user from various predetermined data source servers, and extracting picture style features of advertisement background pictures in the advertisement click data;
S2, during recommendation of advertisements to predetermined users, analyzing the advertisement click data of the various users according to predetermined picture style features and a predetermined first analysis rule to obtain picture style features of advertisement pictures to be recommended corresponding to the various users;
S3, generating recommended advertisements according to the obtained picture style features corresponding to the various users to recommend the recommended advertisements to the corresponding users.

17. The computer readable storage medium according to claim 16, which is **characterized in that** the first analysis rule comprises:
a1, if a user does not have the advertisement click data, determining a crowd type to which the user belongs according to a predetermined crowd type clustering result, and analyzing the advertisement click data of various users in the determined crowd type according to a predetermined second analysis rule to obtain picture style features of advertisement pictures to be recommended corresponding to the user;
a2, if the user has the advertisement click data, and the click number of times of each advertisement clicked by the user is less than or equal to a first preset threshold value, deeming the user as not having the advertisement click data, and determining the picture style features of the advertisement pictures to be recommended corresponding to the user according to the step a1;
a3, if the user has the advertisement click data, and at least one advertisement in the advertisements clicked by the user has the click number of times greater than the first preset threshold value, sequencing the advertisements having the click numbers of times greater than the first preset threshold value according to the click numbers of times, and analyzing the sequenced advertisements by using a predetermined third analysis rule to obtain the picture style features of the advertisement pictures to be recommended corresponding to the user.

18. The computer readable storage medium according to claim 17, which is **characterized in that** the second analysis rule comprises:
counting the click numbers of times of various advertisements clicked by the various users in the determined crowd type;
sequencing a preset number of advertisements having the click numbers of times greater than a second preset threshold value, and calculating a similarity of the picture style features of the various sequenced advertisements;
if the similarity is greater than a preset similarity threshold value, judging whether the predetermined picture style features are included in the picture style features of all the sequenced advertisements or not, and if the predetermined picture style features are included, determining the predetermined picture style features as the picture style features of the advertisement pictures to be recommended corresponding to the user.

19. The computer readable storage medium according to claim 17, which is **characterized in that** the third analysis rule comprises:
determining the picture style features of the advertisements clicked for the most times as the picture style features of the advertisement pictures to be recommended of the user; or
calculating a difference between the click numbers of times of two adjacent advertisements; if the calculated difference is less than a preset difference, determining the picture style features of the advertisements clicked for the most times as the picture style features of the advertisement pictures to be recommended of the user; if the difference is greater than or equal to the preset difference, culling out the advertisement clicked for less times in the two corresponding advertisements and advertisements having the click numbers of times less than that of the advertisement clicked for less times; judging whether the predetermined picture style features are included in the picture style features of advertisements remaining after culling operation or not; if the predetermined picture style features are included, determining the predetermined picture style features as the picture style features of the advertisement pictures to be recommended of the user.

20. The computer readable storage medium according to any one of claims 16 to 19, which is **characterized in that** after the step S3, the following steps are also implemented:
S4, after the recommended advertisements are recommended to the corresponding users, acquiring advertisement click data of exposed recommended advertisements from the various data source servers, and calculating the click rates of the various users for the recommended advertisements on the basis of the advertisement click data;
S5, if the click rates are less than a preset click rate, readjusting the picture style features of the recommended advertisements to obtain new picture style features;
S6, analyzing the advertisement click data of the various users according to the new picture style features and the first analysis rule to re-obtain picture style features of the advertisement pictures to be recommended corresponding to the various users, and generating recommended advertisements according to the re-obtained picture style features corresponding to the various users.
